# EUROPEAN PATENT SPECIFICATION

(11) **EP 3 222 562 B1**
(45) Date of publication and mention of the grant of the patent: **29.09.2021**
(21) Application number: 17162068.5
(22) Date of filing: 21.03.2017
(51) Int. Cl.: B65G 1/04

(54) **HANDLING UNIT FOR MOVING OBJECTS IN AN AUTOMATED WAREHOUSE**
HANDHABUNGSEINHEIT ZUM BEWEGEN VON OBJEKTEN IN EINEM AUTOMATISIERTEN LAGER
UNITÉ DE MANIPULATION POUR DÉPLACER DES OBJETS DANS UN ENTREPÔT AUTOMATISÉ

(30) Priority: 23.03.2016 IT UA20161918
(43) Date of publication of application: 27.09.2017
(73) Proprietor: Label Elettronica S.R.L., 35010 Limena (PD) (IT)
(72) Inventor: RAMI, Enrico, 35133 PADOVA (IT); RAMI, Margherita, 35013 CITTADELLA PD (IT)
(74) Representative: Modiano, Micaela Nadia

(56) References cited:
- EP-A1- 2 522 599
- EP-A2- 0 441 060
- JP-A- 2005 089 059
- JP-A- 2012 121 723
- US-A- 5 532 931
- US-A1- 2015 134 112
- Janusz A. Marszalec ET AL: "Integration of Lasers and Fiber Optics into Robotic Systems (SPIE Tutorial Text Vol. TT17) (Tutorial Texts in Optical Engineering)", , 6 April 1994 (1994-04-06), pages 67-68,138, XP055326938, ISBN: 978-0-8194-1313-0 Retrieved from the Internet: URL:https://books.google.nl/books?hl=en&lr =&id=Wu92ESSiOSIC&oi=fnd&pg=PR9&dq=Integra tion+of+Lasers+and+Fiber+optics+into+robot ic+systems+volume+10&ots=YF3bynV-HE&sig=2c yA4XOnxV_Uv7b5gF0raZB4QZc#v=onepage&q=Inte gration%20of%20Lasers%20and%20Fiber%20opti cs%20into%20robotic%20systems%20volume%201 0&f=false [retrieved on 2016-12-07]

## Description

The present invention relates to a handling unit for moving objects in an automated warehouse.

Robotized systems for automated handling and storage, generally for any type of product and field of application and in particular for drugs, may, during the operating steps for the management of storage and/or pick-up of the products, incur in errors related to the actual physical position in space of the object to be moved, i.e., there may be a difference between the expected/planned position, calculated by the loading algorithm on which the management program is based, and the actual position in which the object to be moved is located at the instant when the robotized handling system grips it.

These differences, or errors, can occur due to causes that are independent of the robotized system itself, such as for example defects of the very products handled, dirty or dusty or open or broken products, and such as for example errors caused by operators assigned to using the machines, or vibrations of the ground on which the machines rest, and many other particular cases.

Moreover, these errors can arise as a consequence of problems of the software, electrical, electronic and/or mechanical type of the robotized system itself, or due to simple wear of the various mechanical and/or electrical components during normal use in addition to any losses of configuration and/or settings/adjustments of the various components that constitute the automated system.

When the robotized system is about to grip a previously stored object, if the latter is not at the expected position or has changed shape, such as an open or crushed box, or has changed its proportions, as in the case of a bag containing elements that can move inside it and therefore render the bag a body that can be deformed over time, current handling systems of which the robotized arm is a part can detect this anomaly only following the failure of the attempted grip action.

Current handling units are in fact provided with onboard sensors which can be of various types, such as laser, ultrasound or others, to check whether the target objects have been gripped or not.

Handling units then scan the storage area in order to check its actual situation regarding the specific position of the products at that moment, using adapted additional dedicated sensors, in this case with a touch/vision capability that is greater than the mere container of the handling unit.

Only after this analysis is it currently possible to reconstruct, on the part of the machine management software, the actual positions in space of the various products in the storage areas being considered.

By operating in the described manner, current handling units often incur in various problems, among which the most relevant relate to possible breakage and/or damage of the products to be moved, as well as breakage of the components used by the robotized arms themselves, for example the grippers, to grip the products.

In the remaining cases, the interaction of the grip elements, grippers of robotized handling units, with products that are already incorrectly positioned or deformed increases the number of said products that are out of position or misaligned and therefore the number of errors.

Since currently it is not possible to prevent these errors that have been considered, there is in general a significant increase in the time required for picking the products planned by the operating plan of the users, who have to block the machine for the time needed to manually pick up the required objects.

This in general is an important limitation of robotized systems themselves for handling, movement and storage in logistics and industrial production.

EP 2522 599 discloses a handling unit according to the preamble of claim 1.

The aim of the present invention is to provide a handling unit for moving objects in an automated warehouse that is capable of obviating the cited limitations of robotized systems of the known type.

Within this aim, an object of the invention is to provide a handling unit that is capable of preserving the integrity of the handled bodies and therefore the shape of the objects to be picked up.

A further object of the invention is to provide a handling unit that is capable of preserving the integrity of the grip tools, such as grippers and the like.

Another object of the invention is to provide a handling unit that limits the need to stop the system for the necessary interventions on the part of the assigned operators.

Another object of the invention is to provide a handling unit that allows to avoid the halting of the robotized storage system of which it is a part and the consequent disadvantages in terms of reset times and costs in terms of labor used in this reset.

Another object of the invention is to provide a handling unit that can be installed easily even on robotic systems of automated warehouses of the known type that already exist.

This aim, as well as these and other objects which will become better apparent hereinafter, are achieved by a handling unit for moving objects in an automated warehouse according to claim 1.

Further characteristics and advantages of the invention will become better apparent from the description of a preferred but not exclusive embodiment of the handling unit according to the invention, illustrated by way of nonlimiting example in the accompanying drawings, wherein:

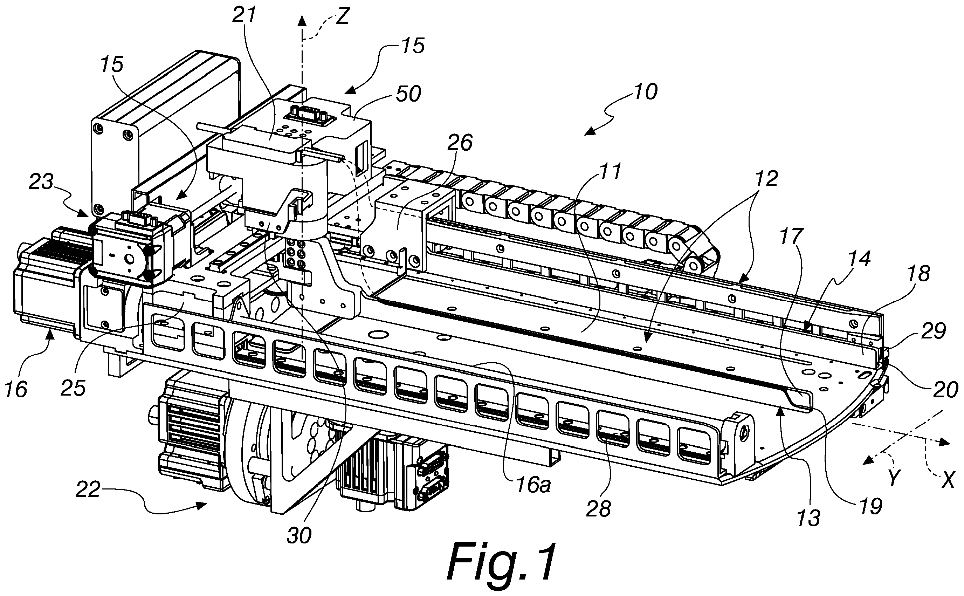

Figure 1 is a perspective view of a handling unit according to the invention;

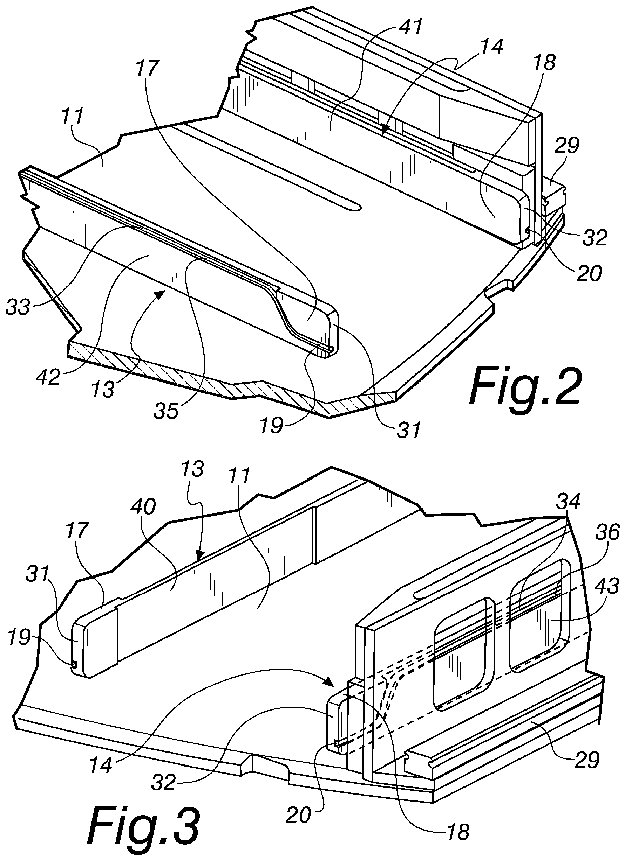

Figure 2 is a perspective view of a detail of the handling unit of Figure 1;
Figure 3 is a different perspective view of the detail of Figure 2;

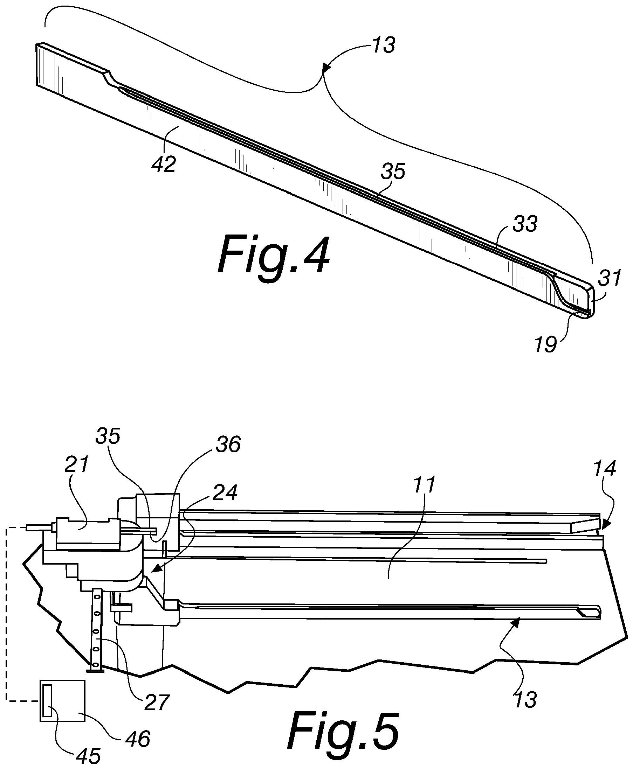

Figure 4 is a perspective view of a component of the handling unit according to the invention;
Figure 5 is another perspective view of the handling unit according to the invention;
Figure 6 is another perspective view of the handling unit according to the invention.

With reference to the figures, a handling unit for moving objects in an automated warehouse, according to the invention, is designated generally by the reference numeral 10.

The handling unit 10 comprises a vise-like grip device 12 with two mutually opposite grip blades 13 and 14, first movement means 15 for the mutual approach and spacing of the blades 13 and 14 and second movement means 16 for the advancement and retraction along a direction X of the blades 13 and 14 with respect to a pick-up or release area, i.e., a direction toward a facing conveyor belt or storage shelf.

The particularity of the handling unit 10 according to the invention resides in that each one of the blades 13 and 14 has, at the free end 17 and 18, a sensor 19 and 20 respectively, for detecting the presence of a body in front of the blade during a step of advancement of said blade.

Furthermore, the handling unit 10 comprises an electronic unit 21 that is interconnected with the sensors 19 and 20 for managing the signals emitted by said sensors.

The vise-like grip device 12 is mounted on a supporting plate 11 for the picked-up objects, for example packages of drugs, to be conveyed.

The plate 11 is in turn supported by an assembly 22 for moving the handling unit 10, which is to be understood as being of a known type.

The vise-like device 12 comprises two mutually opposite blades 13 and 14 respectively, where the term "blades" is understood to reference two flat bars which are arranged substantially at right angles to the arrangement of the supporting plate 11.

The first movement means 15 comprise a first translation means 23 for the approach of the first blade 13 to the second blade 14 along an approach and spacing direction Y, and means 24 for the rotation of the first blade 13 on an axis Z which is substantially perpendicular to the plane defined by the first direction X and second direction Y; the rotation of the first blade 13 toward the second blade 14 produces a safe and stable grip of the vise-like device 12 on the object to be handled.

The rotation means 24 are supported by the first translation means 23 along the second direction Y.

The first translation means 23 and the rotation means 24 are to be understood as being of a per se known type.

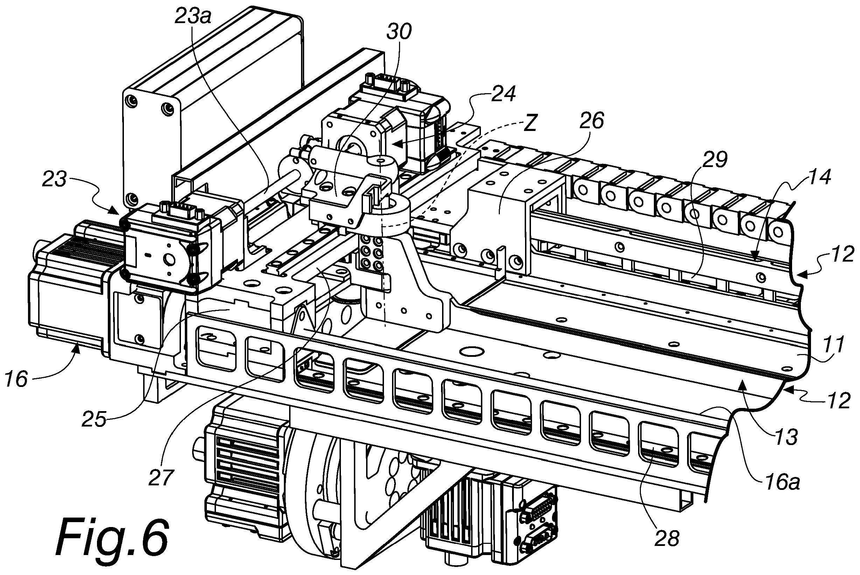

For example, the first translation means 23 are constituted by a system with worm screw and nut 23a which is motorized, while the rotation means 24, arranged within a housing 50 and clearly visible in Figure 6, in which the housing 50 is not present, are of the lever type with a motorized pusher for gripper closure.

The second movement means 16 for the blades 13 and 14 in the direction X are constituted for example by translation means which are to be understood also as being of a known type, for example a system with a motorized worm screw and nut 16a, which comprise two mutually opposite lateral sliders 25 and 26 joined by a transverse element 27, which are adapted to translate on corresponding lateral guides 28 and 29 respectively, which are extended in a parallel arrangement on two opposite sides of the plate 11.

The transverse element 27 constitutes the guide on which a slider 30 is arranged so as to translate, forming with it the first translation means 23, on which the rotation means 24 are in turn mounted.

Each sensor 19 and 20 is of the fiber optic type.

The optical fibers of these sensors have a sectional diameter between 0.5 millimeters and 2 millimeters.

The detection end of each sensor 19 and 20 protrudes from the front surface 31 and 32 respectively of the blades 13 and 14, i.e., from the surface that is directed in the direction X of advancement towards an object to be gripped.

The plate-like body of the blade 13 and 14 is provided with a longitudinal slot 33 and 34 for the accommodation of the corresponding cable 35 and 36 of the sensor 19 and 20.

The sensors 19 and 20 integrated in the blades 13 and 14 of the vise-like device 12 give the system a compactness which does not compromise the operation of the vise-like device 12 or of the sensors themselves.

The electronic unit 21, interconnected with the sensors 19 and 20 for the management of the signals emitted by said sensors, is constituted by an electronic board for the encoding of the signals that arrive from the sensors.

The electronic unit 21 is for example mounted above the housing 50.

The encoding board is of the digital or analog or digital and analog type, depending on the required functionalities and on the field of use.

If additional information regarding the distance from the target object is required, in order to allow different software settings, or for a different operation of the movement of the vise-like device 12 in relation to the distance, the management allowed by means of an encoding board of the analog type allows to evaluate the different distances between the sensor and the target object.

In a constructive variation of the handling unit 10 according to the invention, not shown for the sake of simplicity, there are additional sensors, for example and in particular of the fiber-optic type, on the lateral surfaces of the blades 13 and 14.

The inner lateral surfaces 40 and 41 and outer surfaces 42 and 43 face the rows of objects to be picked up when the blades 13 and 14 are each arranged in a preset interspace between two adjacent rows of objects.

These additional sensors can provide significant additional information again during the steps for the movement of the objects.

Specifically, the sensors on the inner lateral surfaces 40 and 41, i.e., the ones directed towards the target object, allow to check and optionally tell said handling unit whether the object or objects, if they are more than one, has or have been gripped correctly or not (they might slip from the grip and remain on the storage surface).

Specifically, the sensors on the outer lateral surfaces 42 and 43, therefore directed toward the other rows of non-target objects, might be used to check whether there are additional collisions and/or displacements that are not expected by the program.

The electronic unit 21 is connected directly to the control and management board 45 of the electric motor 46 of the second movement means 16 for the blades 13 and 14 in the direction X.

An example of operation of the handling unit 10 according to the invention is as follows.

In an automated drug warehouse, when the packages of a row of packages are not perfectly aligned on a glass shelf that supports them, the distance between one row of packages and the next is less than 14 millimeters, where 14 millimeters is the minimum width of the lane between two nearby rows of objects for the passage of one of the blades 13 and 14; the vise-like device 12 is thus prevented from performing the grip correctly, sometimes causing damage to the packages themselves.

The handling unit 10 according to the invention allows to give the robotized system 10 of which the handling unit 10 is a part, the ability to detect beforehand, i.e., during the step for grip of the packages, any misalignment of the package or packages, avoiding first of all the possibility of damaging the packages and even before the possibility of the breakage of the components of the handling unit itself, above all the blades 13 and 14, and also avoiding all the mentioned drawbacks that are typical of handling units of the known type.

By means of the sensors installed directly on board the blades, it is possible to identify in advance the presence of an object out of place during the advancement of said blades within the lanes between one row of packages and the next laterally adjacent one.

By virtue of the invention, the robotized system that comprises the handling unit 10 can stop (stop the vise-like device 12 for handling) preemptively, before striking and/or simply touching the product/item planned by the specific function. Furthermore, at a later moment, said robotized system can recover all the objects out of position, i.e., in error, without the intervention of any operator.

In view of the fact that the object that is the target of the grip operation, already in error, has not undergone further unwanted displacements with respect to the stored position in space, and therefore in the presence of a slight and/or not excessive misalignment it is possible to check the exact position of said misaligned target object by keeping the grippers locked in their stop position.

The robotized system, with the blades 13 and 14 locked, performs a translation along the direction Y of the entire handling unit 10, and/or moving exclusively and/or jointly the blades 13 and 14, until the sensors being considered are "cleared", i.e., no longer detect an object that might hinder the advancement of the grippers and/or the possibility to strike and consequently modify the position of the target product or products and/or of the objects accommodated located in the immediate vicinity, for example arranged in adjacent rows and/or individual objects that are not in a row, or objects accommodated on adjacent shelves.

By virtue of the invention it is possible to manage with maximum safety deeper shelves for storing the products, being able to consider greater tolerances regarding the positions expected by the software.

In particular, the possibility of contamination and/or propagation of the error, which in the case of deeper shelves would involve an even larger number of products, is eliminated.

This characteristic allows to provide automated solutions for storage, and more generally for handling, which are deeper and therefore can have more flexible structural characteristics, being able to adapt more easily to the various environments in which said robotized system is to be installed. Furthermore, the invention allows the management of objects with nonrigid shapes which due to an even minimal pressure (applied in order to grip the product) and/or to perform in general the handling thereof, can change shape, proportion and/or dimensions, such as for example food products such as bags of pasta, flour, wheat, liquids in nonrigid pouches and other similar products.

In practice it has been found that the invention achieves the intended aim and objects.

In particular, the invention provides a handling unit that is capable of not increasing the position and shape errors of the objects to be picked up.

Furthermore, the invention provides a handling unit that limits the need to stop the system for the necessary interventions on the part of the assigned operators.

Moreover, the invention provides a handling unit that is capable of preserving the integrity of the grip tools, such as grippers and the like.

Furthermore, the invention provides a handling unit that can be installed easily even on robotic systems of automated warehouses of a known type that already exist.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A handling unit (10) for moving objects in an automated warehouse, comprising a vise-like grip device (12) with two mutually opposite grip blades (13, 14), first movement means (15) for the mutual approach and spacing of said blades (13, 14) and second movement means (16) for the advancement and retraction along a first direction (X) of said blades (13, 14) with respect to a pick-up or release area;
- said vise-like grip device (12) being mounted on a supporting plate (11) for picked-up objects, said supporting plate (11) being supported by an assembly (22) for moving the handling unit (10),
- said first movement means (15) comprising a first translation means (23) for the approach of a first blade (13) to a second blade (14) of said two mutually opposite grip blades (13, 14) along an approach and spacing second direction (Y), and means (24) for the rotation of said first blade (13) on an axis (Z) which is substantially perpendicular to the plane defined by the first direction (X) and the second direction (Y) such that the rotation of the first blade (13) toward the second blade (14) produces a safe and stable grip of the vise-like device (12) on the object to be handled, said rotation means (24) being supported by said first translation means (23) along said second direction (Y), **characterized in that**:
- each one of said blades (13, 14) has, at the free end (17, 18), a sensor (19, 20) for detecting the presence of a body in front of the blade during a step of advancement of said blade,
- said handling unit (10) comprising an electronic unit (21) that is interconnected with said sensors (19, 20) for the management of the signals emitted by them, further **characterized in that** each sensor (19, 20) is of the fiber optic type and **in that** the flat body of the blade (13, 14) is provided with a longitudinal slot (33, 34) for the accommodation of the corresponding cable (35, 36) of the sensor (19, 20) and **in that** said electronic unit (21) is connected directly to the control and management board (45) of the electric motor (46) of the second means (16) for the movement of the blades (13, 14) in the first direction (X).

2. The handling unit according to claim 1, **characterized in that** the optical fibers of said sensors (19, 20) have a sectional diameter between 0.5 mm and 2 mm.

3. The handling unit according to one or more of the preceding claims, **characterized in that** the detection end of each sensor (19, 20) faces outward from the front surface (31, 32) of the blades (13, 14), or from the surface that is directed in the advancement direction (X) toward an object to be gripped.

4. The handling unit according to one or more of the preceding claims, **characterized in that** said electronic unit (21) is constituted by an electronic board for encoding the signals that arrive from the sensors.

5. The handling unit according to one or more of the preceding claims, **characterized in that** said encoding board is of the digital or analog type or of the digital and analog type.

6. The handling unit according to one or more of the preceding claims, **characterized in that** it comprises additional sensors on the lateral surfaces of the blades (13, 14).

## Patentansprüche

1. Eine Handhabungseinheit (10) zum Bewegen von Objekten in einem automatisierten Lager, die Folgendes umfasst: eine schraubstockähnliche Greifvorrichtung (12) mit zwei einander gegenüberliegenden Griffleisten (13, 14), erste Bewegungsmittel (15) zur Annäherung der Leisten (13, 14) aneinander und ihrer Beabstandung voneinander und zweite Bewegungsmittel (16) zur Vorwärts- und Rückwärtsbewegung der Leisten (13, 14) in einer ersten Richtung (X) mit Bezug auf einen Aufnahme- oder Abgabebereich;
- wobei die schraubstockähnliche Greifvorrichtung (12) auf einer Trägerplatte (11) für aufgenommene Objekte montiert ist, wobei die Trägerplatte (11) von einem Aufbau (22) zum Bewegen der Handhabungseinheit (10) getragen ist,
- wobei die ersten Bewegungsmittel (15) Folgendes umfassen: ein erstes Translationsmittel (23) zur Annäherung einer ersten Leiste (13) und einer zweiten Leiste (14) der beiden einander gegenüberliegenden Griffleisten (13, 14) in einer zweiten Annäherungs- und Beabstandungsrichtung (Y), und Mittel (24) zur Rotation der ersten Leiste (13) um eine Achse (Z), die im Wesentlichen senkrecht zu der durch die erste Richtung (X) und die zweite Richtung (Y) bestimmten Ebene ist, so dass die Drehung der ersten Leiste (13) zur zweiten Leiste (14) einen sicheren und festen Griff des zu handhabenden Objektes durch die schraubstockähnliche Vorrichtung (12) erzeugt; wobei die Rotationsmittel (24) in der zweiten Richtung (Y) von dem ersten Translationsmittel (23) getragen sind; **dadurch gekennzeichnet, dass**:
- jede der Leisten (13, 14) an ihrem freien Ende (17, 18) einen Sensor (19, 20) zur Erfassung der Anwesenheit eines Körpers vor der Leiste während eines Schritts des Vorschubs der Leiste hat,
- die Handhabungseinheit (10) eine Elektronikeinheit (21) umfasst, die zur Verwaltung der von den Sensoren (19, 20) ausgesandten Signale mit jenen verbunden ist; weiter **dadurch gekennzeichnet, dass** jeder Sensor (19, 20) vom Faseroptiktyp ist, und dadurch, dass der flache Körper der Leiste (13, 14) mit einem Längsschlitz (33, 34) für die Aufnahme des entsprechenden Kabels (35, 36) des Sensors (19, 20) versehen ist, und dadurch, dass die Elektronikeinheit (21) direkt mit der Steuerungs- und Verwaltungskarte (45) des Elektromotors (46) der zweiten Mittel (16) für die Bewegung der Leisten (13, 14) in die erste Richtung (X) verbunden ist.

2. Die Handhabungseinheit gemäß Anspruch 1, **dadurch gekennzeichnet, dass** die optischen Fasern der Sensoren (19, 20) einen Querschnittsdurchmesser zwischen 0,5 mm und 2 mm haben.

3. Die Handhabungseinheit gemäß einem oder mehreren der obigen Ansprüche, **dadurch gekennzeichnet, dass** das Erfassungsende jedes Sensors (19, 20) von der Vorderfläche (31, 32) der Leisten (13, 14) oder von der Oberfläche nach außen weist, die der Vorschubrichtung (X) zu einem zu greifenden Objekt zugewandt ist.

4. Die Handhabungseinheit gemäß einem oder mehreren der obigen Ansprüche, **dadurch gekennzeichnet, dass** die Elektronikeinheit (21) aus einer elektronischen Leiterkarte zur Codierung der Signale besteht, die von den Sensoren kommen.

5. Die Handhabungseinheit gemäß einem oder mehreren der obigen Ansprüche, **dadurch gekennzeichnet, dass** die Codierkarte vom digitalen oder analogen Typ oder vom digitalen und analogen Typ ist.

6. Die Handhabungseinheit gemäß einem oder mehreren der obigen Ansprüche, **dadurch gekennzeichnet, dass** sie zusätzliche Sensoren an den Seitenflächen der Leisten (13, 14) umfasst.

## Revendications

1. Unité de manipulation (10) pour déplacer des objets dans un entrepôt automatisé, comportant un dispositif de saisie analogue à un étau (12) avec deux lames de saisie mutuellement opposées (13, 14), des premiers moyens de déplacement (15) pour l'approche et l'espacement mutuels desdites lames (13, 14) et des seconds moyens de déplacement (16) pour l'avancée et la rétraction le long d'une première direction (X) desdites lames (13, 14) par rapport à une zone de ramassage ou de libération,
- ledit dispositif de saisie analogue à un étau (12) étant monté sur une plaque de support (11) pour des objets ramassés, ladite plaque de support (11) étant supportée par un ensemble (22) pour déplacer l'unité de manipulation (10),
- lesdits premiers moyens de déplacement (15) comportant des premiers moyens de translation (23) pour l'approche d'une première lame (13) jusqu'à une seconde lame (14) desdites deux lames de saisie mutuellement opposées (13, 14) le long d'une seconde direction d'approche et d'espacement (Y), et des moyens (24) pour la rotation de ladite première lame (13) sur un axe (Z) qui est sensiblement perpendiculaire au plan défini par la première direction (X) et la seconde direction (Y) de telle sorte que la rotation de la première lame (13) vers la seconde lame (14) produit une saisie sûre et stable du dispositif analogue à un étau (12) sur l'objet à manipuler, lesdits moyens de rotation (24) étant supportés par lesdits premiers moyens de translation (23) le long de ladite seconde direction (Y),
**caractérisée en ce que** :
- chacune desdites lames (13, 14) a, au niveau de l'extrémité libre (17, 18), un capteur (19, 20) pour détecter la présence d'un corps à l'avant de la lame pendant une étape d'avancée de ladite lame,
- ladite unité de manipulation (10) comportant une unité électronique (21) qui est interconnectée aux-dits capteurs (19, 20) pour la gestion des signaux émis par eux, **caractérisée en outre en ce que** chaque capteur (19, 20) est du type à fibre optique et **en ce que** le corps plat de la lame (13, 14) est pourvu d'une fente longitudinale (33, 34) pour la réception du câble (35, 36) correspondant du capteur (19, 20) et **en ce que** ladite unité électronique (21) est directement reliée à la carte de commande et de gestion (45) du moteur électrique (46) des seconds moyens (16) pour le déplacement des lames (13, 14) dans la première direction (X).

2. Unité de manipulation selon la revendication 1, **caractérisée en ce que** les fibres optiques desdits capteurs (19, 20) ont un diamètre de section compris entre 0,5 mm et 2 mm.

3. Unité de manipulation selon une ou plusieurs des revendications précédentes, **caractérisée en ce que** l'extrémité de détection de chaque capteur (19, 20) est dirigée vers l'extérieur par rapport à la surface avant (31, 32) des lames (13, 14), ou par rapport à la surface qui est dirigée dans la direction d'avance (X) vers un objet à saisir.

4. Unité de manipulation selon une ou plusieurs des revendications précédentes, **caractérisée en ce que** ladite unité électronique (21) est constituée d'une carte électronique pour coder les signaux qui arrivent des capteurs.

5. Unité de manipulation selon une ou plusieurs des revendications précédentes, **caractérisée en ce que** ladite carte de codage est du type numérique ou analogique ou du type numérique et analogique.

6. Unité de manipulation selon une ou plusieurs des revendications précédentes, **caractérisée en ce qu'**elle comporte des capteurs supplémentaires sur les surfaces latérales des lames (13, 14).
